# EUROPÄISCHE PATENTSCHRIFT

(11) **EP 1 430 670 B1**
(45) Veröffentlichungstag und Bekanntmachung des Hinweises auf die Patenterteilung: **21.12.2005**
(21) Anmeldenummer: 02774359.0
(22) Anmeldetag: 13.09.2002
(51) Int. Cl.: H04L 12/64, H04L 12/24

(54) **VERFAHREN ZUM BETRIEB EINES ISOCHRONEN, ZYKLISCHEN KOMMUNIKATIONSSYSTEMS**
METHOD FOR OPERATING AN ISOCHRONOUS CYCLIC COMMUNICATION SYSTEM
PROCEDE POUR L'EXPLOITATION D'UN SYSTEME DE COMMUNICATION CYCLIQUE ISOCHRONE

(30) Priorität: 26.09.2001 DE 10147424; 27.06.2002 DE 10228823
(43) Veröffentlichungstag der Anmeldung: 23.06.2004
(73) Patentinhaber: SIEMENS AKTIENGESELLSCHAFT, 80333 München (DE)
(72) Erfinder: BRÜCKNER, Dieter, 96199 Zapfendorf (DE); GÖTZ, Franz-Josef, 91180 Heideck (DE); KLOTZ, Dieter, 90768 Fürth (DE); SCHIMMER, Jürgen, 90473 Nürnberg (DE)
(86) Internationale Anmeldenummer: PCT/DE2002/003438
(87) Internationale Veröffentlichungsnummer: WO 2003/028320

(56) Entgegenhaltungen:
- WO-A-01/47162
- WO-A-98/28875
- US-A- 5 594 734
- US-A1- 2002 064 157

## Beschreibung

Die Erfindung betrifft ein Verfahren zum Betrieb eines isochronen, zyklischen Kommunikationssystems, ein digitales Speichermedium mit entsprechenden Programmmitteln, einen Teilnehmer an einem solchen Kommunikationssystem und ein Kommunikationssystem.

Unter einem synchronen, getakteten Kommunikationssystem mit Äquidistanz-Eigenschaften versteht man ein System aus wenigstens zwei Teilnehmern, die über ein Datennetz zum Zweck des gegenseitigen Austausches von Daten bzw. der gegenseitigen Übertragung von Daten miteinander verbunden sind. Dabei erfolgt der Datenaustausch zyklisch in äquidistanten Kommunikationszyklen, die durch den vom System verwendeten Kommunikationstakt vorgegeben werden. Teilnehmer sind beispielsweise zentrale Automatisierungsgeräte, Programmier-, Projektierungs- oder Bediengeräte, Peripheriegeräte wie z.B. Ein-/Ausgabe-Baugruppen, Antriebe, Aktoren, Sensoren, speicherprogrammierbare Steuerungen (SPS) oder andere Kontrolleinheiten, Computer, oder Maschinen, die elektronische Daten mit anderen Maschinen austauschen, insbesondere Daten von anderen Maschinen verarbeiten. Teilnehmer werden auch Netzwerkknoten oder Knoten genannt. Unter Kontrolleinheiten werden im Folgenden Regler- oder Steuerungseinheiten jeglicher Art verstanden, aber auch beispielsweise Switches und/oder Switch-Controller. Als Datennetze werden beispielsweise Bussysteme wie z.B. Feldbus, Profibus, Ethernet, Industrial Ethernet, FireWire oder auch PC-interne Bussysteme (PCI), etc., insbesondere aber auch isochrones Realtime Ethernet, verwendet.

Datennetze ermöglichen die Kommunikation zwischen mehreren Teilnehmern durch die Vernetzung, also Verbindung der einzelnen Teilnehmer untereinander. Kommunikation bedeutet dabei die Übertragung von Daten zwischen den Teilnehmern. Die zu übertragenden Daten werden dabei als Datentelegramme verschickt, d.h. die Daten werden zu mehreren Paketen zusammengepackt und in dieser Form über das Datennetz an den entsprechenden Empfänger gesendet. Man spricht deshalb auch von Datenpaketen. Der Begriff Übertragung von Daten wird dabei in diesem Dokument völlig synonym zur oben erwähnten Übertragung von Datentelegrammen oder Datenpaketen verwendet.

In verteilten Automatisierungssystemen, beispielsweise im Bereich Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmer führt, im Gegensatz zur nicht echtzeitkritischen, beispielsweise inter- bzw. intranetbasierten Datenkommunikation.

Die echtzeitfähige Ethernet-Kommunikation ist eine geplante, zyklische Kommunikation. Jedem echtzeitfähigen Ethernet-Port sind daher sowohl eine Liste für die zu sendenden Echtzeit-Telegramme (IRT-Telegramme, Isochrone Realtime-Telegramme) als auch eine Liste für die zu empfangenen IRT-Telegramme zugeordnet. Die Listenelemente entsprechen jeweils einem IRT-Telegramm. Jedes Listenelement enthält darüber hinaus die Information, zu welchem Zeitpunkt innerhalb des Isochronzyklus (Kommunikationszyklus) das entsprechend zugeordnete IRT-Telegramm empfangen werden muss bzw. versendet werden soll. In einem Isochronzyklus werden die Sende- und Empfangslisten aller echtzeitfähigen Ethernet-Ports abgearbeitet und somit die IRT-Kommunikation im echtzeitfähigen Ethernet-Netzwerk durchgeführt. Die IRT-Kommunikation muss jedoch in der Initialisierungsphase geplant werden und kann sich während des IRT-Betriebes nicht ändern. Dies führt zu einer unflexiblen IRT-Kommunikation, die ein dynamisches Verhalten nicht zulässt.

Besonders der Betrieb von Teilnetzen, ohne die spätere, endgültige Projektierung des Gesamtnetzes zu kennen, stellt sich in der Praxis als schwierig dar. Solche Systeme müssen bisher bei jeder Erweiterung abgeschaltet, neu initialisiert und wieder angefahren werden. Ist das spätere Gesamtsystem bereits bekannt, so ist eine stoßfreie Erweiterung bisher nur dadurch zu realisieren, dass die spätere IRT-Kommunikation des Gesamtnetzes bereits bei der Implementierung des Teilnetzes mit geplant und im zyklischen Betrieb durchgeführt wird. Eine nachträgliche, vorher nicht bekannte Änderung führt jedoch wiederum zu den bereits beschriebenen Problemen und deren Auswirkungen. Auch die Umstellung der IRT-Kommunikation des Gesamtnetzwerkes aufgrund geänderter Randbedingungen der Anlage bzw. der Produktion geschieht bisher durch Abschaltung, Neuinitialisierung und Anfahren der gesamten IRT-Kommunikation bzw. der Anlage.

Ein äquidistanter deterministischer zyklischer Datenaustausch in Kommunikationssystemen basiert auf einer gemeinsamen Takt- bzw. Zeitbasis aller an der Kommunikation beteiligten Komponenten. Die Takt- bzw. Zeitbasis wird von einer ausgezeichneten Komponente (Taktschläger) zu den anderen Komponenten übertragen. Bei isochronem Realtime-Ethernet wird der Takt bzw. die Zeitbasis von einem Synchronisationsmaster durch das Senden von Synchronisationstelegrammen vorgegeben.

Die Kommunikation mit echtzeitfähigen Ethernet-Komponenten teilt sich in die zyklische, geplante IRT-Kommunikation und der nichtzyklischen und ungeplanten NRT- (Non Realtime) Kommunikation auf. Die NRT-Kommunikation entspricht dabei dem heute üblichen und allgemein als Ethernet-Kommunikation bekannten Ethernet-Datenverkehr. In jedem Isochronzyklus (Kommunikationszyklus) wird die zyklische Echtzeit-Kommunikation als auch die nicht-zyklische Nicht-Echtzeit-Kommunikation durchgeführt. Die IRT-Sende- und IRT-Empfangslisten für die Echtzeit-Kommunikation werden in einem Kommunikations-Speicher abgelegt.

In der deutschen Patentanmeldung DE 100 58 524.8 ist ein System und ein Verfahren zur Übertragung von Daten über schaltbare Datennetze, insbesondere das Ethernet, offenbart, das einen Mischbetrieb von echtzeitkritischer und nichtechtzeitkritischer, insbesondere Inter- bzw. Intranet basierter Datenkommunikation erlaubt.

Die US 5,594,734 A offenbart den Betrieb eines Netzwerks, über das sowohl isochrone, als auch nicht-isochrone Daten übertragen werden. Zur Übertragung wird ein Zeitmultiplexverfahren eingesetzt, wobei das Umschalten zwischen den Daten mit einer in einem Controller befindlichen Umschalttabelle erfolgt.

Der Erfindung liegt die Aufgabe zu Grunde, ein verbessertes Verfahren zur Flexibilisierung der Echtzeitkommunikation in einem isochronen, zyklischen Kommunikationssystem zu schaffen. Ferner liegt der Erfindung die Schaffung eines entsprechenden digitalen Speichermediums, eines Teilnehmers an einem solchen Kommunikationssystem und einem entsprechenden Kommunikationssystem zu Grunde.

Die der Erfindung zu Grunde liegende Aufgabe wird jeweils mit den Merkmalen der unabhängigen Patentansprüche gelöst. Bevorzugte Ausführungsformen der Erfindung sind in den abhängigen Patentansprüchen angegeben.

Die Erfindung ermöglicht es die Projektierungsdaten, welche die Basis für die geplante Echtzeitkommunikation in dem isochronen, zyklischen Kommunikationssystem bilden, während des Betriebs zu verändern. Hierzu werden die geänderten Projektierungsdaten in dem ungeplanten NRT-Teil eines oder mehrerer Kommunikationszyklen an die Teilnehmer des Kommunikationssystems übertragen und dort gespeichert. Ferner wird an die Teilnehmer der Umschaltzeitpunkt auf die veränderten Projektierungsdaten kommuniziert. Bei Erreichung des Umschaltzeitpunkts wird in den Teilnehmern auf die veränderten Projektierungsdaten als Basis für die geplante IRT-Kommunikation zugegriffen.

Diese Vorgehensweise hat den Vorteil, dass eine dynamische Änderung der Projektierungsdaten der IRT-Kommunikation erreicht werden kann, ohne den Datentelegrammverkehr in dem Kommunikationssystem zu unterbrechen. Vorzugsweise bleibt ebenso die Möglichkeit der NRT-Kommunikation über das Kommunikationssystem zu jedem Zeitpunkt erhalten. Nach einer bevorzugten Ausführungsform der Erfindung wird der Zeitanteil in einem Kommunikationszyklus, der für die NRT-Kommunikation frei zur Verfügung steht, an die Übertragung der Projektierungsdaten angepasst, das heißt der NRT-Anteil wird kurzfristig vergrößert, um genügend Übertragungskapazität für die Übertragung der Projektierungsdaten zu schaffen.

Nach einer bevorzugten Ausführungsform der Erfindung wird der Umschaltzeitpunkt auf die veränderten Projektierungsdaten in einem Broadcast Datentelegramm an die Teilnehmer des Kommunikationssystems übertragen.

Nach einer weiteren bevorzugten Ausführungsform der Erfindung beinhalten die Projektierungsdaten Sende- und Empfangslisten für jeden Port eines Teilnehmers. Die Sendeliste eines Ports gibt dabei die in dem IRT-Teil eines Isochronzyklus zu sendenden Datentelegramme und deren Sendezeitpunkt an. Die Angabe der Datentelegramme erfolgt dabei vorzugsweise über deren jeweilige Kennung. Entsprechend beinhaltet eine Empfangsliste, die zu bestimmten Zeitpunkten innerhalb des IRT-Teils eines Isochronzyklus zu empfangenden Datentelegramme, die über ihre Kennung identifiziert werden.

Nach einer bevorzugten Ausführungsform der Erfindung wird eine Veränderung der Projektierungsdaten an die Teilnehmer kommuniziert, indem die aktualisierten Sende- und Empfangslisten an die Teilnehmer in dem NRT-Teil eines oder mehrerer Kommunikationszyklen übertragen werden. Dabei ist es ausreichend, wenn jeder Teilnehmer nur die seine Ports betreffenden Sende- und Empfangslisten empfängt bzw, abspeichert.

Nach einer bevorzugten Ausführungsform der Erfindung erfolgt die Abspeicherung der ursprünglichen Sende- und Empfangslisten und der veränderten Sende- und Empfangslisten in unterschiedlichen Adressbereichen eines Kommunikationsspeichers eines Teilnehmers.

Nach einer weiteren bevorzugten Ausführungsform der Erfindung weist ein Teilnehmer ein Start-Register zur Speicherung einer Einsprungadresse in den Adressbereich des Kommunikationsspeichers auf, der die aktuellen Projektierungsdaten, das heißt beispielsweise Sende- und Empfangslisten beinhaltet. Zum Umschalten auf die veränderten Projektierungsdaten wird das Start-Register von einem Anwendungsprogramm des Teilnehmers mit einer neuen Einsprungadresse überschrieben, die auf den Speicherbereich zeigt, in dem sich die veränderten Projektierungsdaten befinden.

Nach einer weiteren bevorzugten Ausführungsform der Erfindung werden die veränderten Projektierungsdaten und der Umschaltzeitpunkt von einem Projektierungsmaster in das Kommunikationssystem eingespeist.

Nach einer weiteren bevorzugten Ausführungsform der Erfindung werden die IRT-Sende- und IRT-Empfangslisten für die Echtzeitkommunikation in einem Kommunikations-Speicher eines Teilnehmers abgelegt.

Der Beginn der Listen (Einsprungadresse auf den Beginn der Listenstrukturen im Kommunikations-Speicher) ist ebenfalls in einem Speicherbereich des Kommunikations-Speicher hinterlegt. In einem Start-Register ist wiederum die Einsprungadresse auf diesen Speicherbereich abgespeichert.

Zu Beginn jedes Isochronzyklus übernimmt der entsprechende Ethernet-Port anhand des Registerinhaltes den Einsprung auf den Adressbereich in der wiederum die Adressen auf den Beginn der Listen im Kommunikations-Speicher hinterlegt sind. Je nach parametrierter Portnummer, werden je Port unterschiedliche Sende- und Empfangslisten ausgewählt und während des Isochronzyklus abgearbeitet. Für eine völlige Umstellung der IRT-Kommunikation können nun über den NRT-Datenverkehr durch den Projektierungsmaster neue Projektierungsdaten und damit neue Daten für die geplanten IRT-Sende- und IRT-Empfangslisten versandt und an den Empfängern durch die dort laufende Anwendung, auf nicht genutzte Speicherbereiche im Kommunikations-Speicher abgelegt werden. Die bisherige IRT-Kommunikation bleibt davon gänzlich unbeeinflusst.

Über ein Broadcast-Telegramm (an alle Teilnehmer des Ethernet-Netzwerkes) wird durch den Projektierungsmaster anschließend bekanntgegeben, in welchem Isochronzyklus die neue IRT-Kommunikation wirksam werden soll. Die auf den Teilnehmern laufenden Anwendungen erhalten diese Daten ebenso, wie die Daten, die für die neuen IRT-Sende- und IRT-Empfangslisten bereitgestellt wurden.

Da für den zyklischen Datenverkehr ein synchroner Isochronzyklus über alle Teilnehmer hinweg erforderlich ist, werden nun die Anwendungen jedes Teilnehmers beim erreichten Zeitpunkt und damit zum gleichen Zeitpunkt, das Start-Register mit der neuen Einsprungadresse des Kommunikations-Speicher laden, an der die neuen Sende- und Empfangslisten der Ethernet-Ports abgelegt wurden. Im darauffolgenden Isochronzyklus werden beim Lesen des Start-Registers den Ethernet-Ports nun andere IRT-Sende- und IRT-Empfangs-listen bereitgestellt. Die Umschaltung der Listenstrukturen (auch redundante Listen) ist somit im nächsten Isochronzyklus stoßfrei erfolgt.

Im weiteren werden bevorzugte Ausführungsformen der Erfindung mit Bezugnahme auf die Zeichnungen näher erläutert. Es zeigen:
- Figur 1: ein Flussdiagramm einer bevorzugten Ausführungsform eines erfindungsgemäßen Verfahrens zur Aktualisierung von Projektierungsdaten,
- Figur 2: ein Blockdiagramm eines Teilnehmers eines isochronen, zyklischen Kommunikationssystems,
- Figur 3: einen Kommunikationszyklus während der Übertragung veränderter Projektierungsdaten und nach der Übertragung der veränderten Projektierungsdaten.

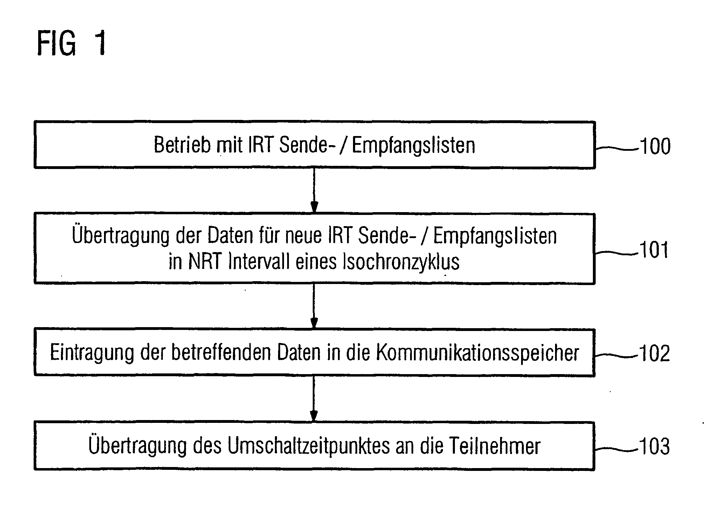

Die Figur 1 zeigt ein Flussdiagramm bezüglich der Veränderung von Projektierungsdaten in einem isochronen, zyklischen Kommunikationssystem des Typs, wie es beispielsweise aus der DE 100 58 524.8 bekannt ist.

In dem Schritt 100 wird das Kommunikationssystem mit Projektierungsdaten betrieben, die Sende- und Empfangslisten für die IRT-Kommunikation für jeden Port der Teilnehmer des Kommunikationssystems beinhalten. Die einen Teilnehmer bzw. dessen Ports betreffenden Sende- und Empfangslisten sind dabei in dem Kommunikationsspeicher des Teilnehmers abgelegt.

In dem Schritt 101 werden veränderte Projektierungsdaten zu den Teilnehmern des Kommunikationssystems übertragen. Die Übertragung der veränderten Projektierungsdaten erfolgt dabei in dem NRT-Teil eines oder mehrerer Kommunikationszyklen. Dies ist möglich, da es sich bei dem NRT-Teil des Kommunikationszyklus um einen für die ungeplante Kommunikation zur Verfügung stehenden logischen Übertragungskanal handelt. In dem hier betrachteten Ausführungsbeispiel werden sämtliche IRT-Sende- und Empfangslisten an die Teilnehmer neu übertragen. Dies kann beispielsweise durch an die betreffenden Teilnehmer gerichtete NRT-Datentelegramme erfolgen, die jeweils die neuen Sende- und Empfangslisten für den betreffenden Teilnehmer beinhalten.

In dem Schritt 102 werden die veränderten Projektierungsdaten in die Kommunikationsspeicher der Teilnehmer eingetragen. Dies kann so erfolgen, dass die neuen Sende- und Empfangslisten in dem Kommunikationsspeicher eines Teilnehmers abgelegt werden, ohne zunächst die vorherigen Sende- und Empfangslisten zu überschreiben. Dadurch ist sichergestellt, dass der laufende Betrieb des Kommunikationssystems durch den Empfang und die Speicherung der veränderten Sende- und Empfangslisten zunächst nicht tangiert wird.

In dem Schritt 103 wird der Umschaltzeitpunkt für das Umschalten von den vorherigen Sende- und Empfangslisten auf die neuen Sende- und Empfangslisten, das heißt die veränderten Projektierungsdaten, an die Teilnehmer kommuniziert. Dieser Umschaltzeitpunkt wird von jedem der Teilnehmer abgespeichert und mit der lokalen Zeit des Teilnehmers verglichen. Sobald der Umschaltzeitpunkt erreicht worden ist, werden die neuen Sende- und Empfangslisten, die in den Kommunikationsspeichern der Teilnehmer abgelegt sind, für den weiteren Betrieb der IRT-Kommunikation verwendet.

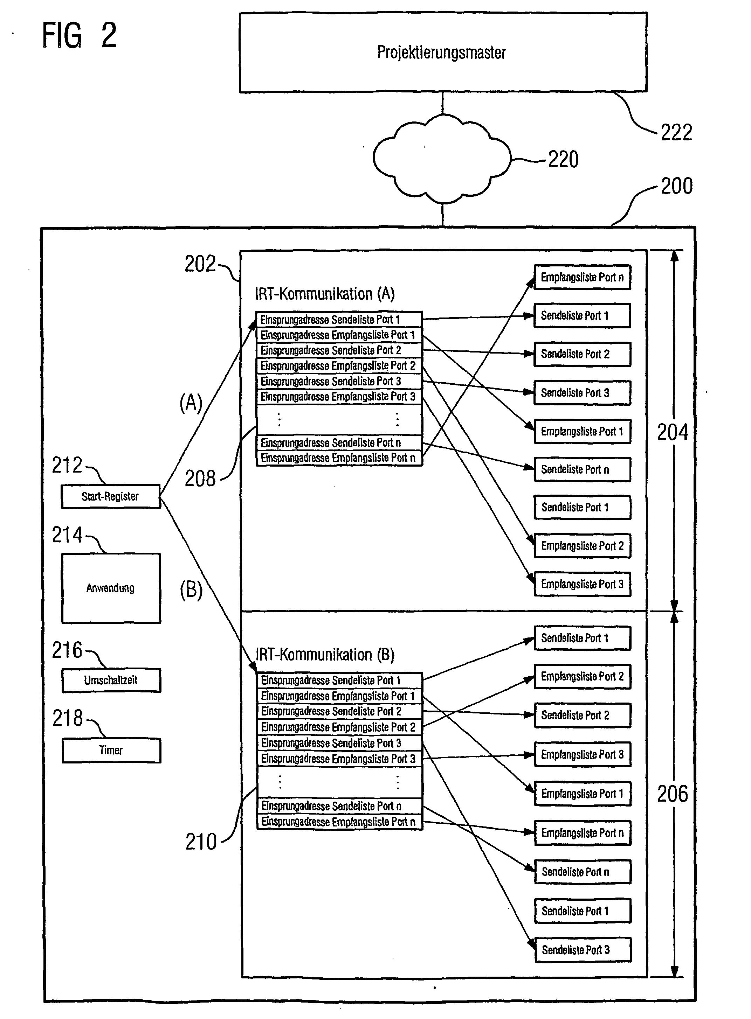

Die Figur 2 zeigt ein entsprechendes Block-Diagramm eines Teilnehmers. Der Teilnehmer 200 hat mehrere Ports 1 bis n, über die jeweils Datentelegramme gesendet und empfangen werden können.

Ferner hat der Teilnehmer 200 einen Kommunikationsspeicher 202 zur Speicherung von Projektierungsdaten. In einem Adressbereich 204 ist ein erster Satz von Projektierungsdaten abgelegt. Der Kommunikationsspeicher 202 ist hinreichend groß, so dass in einem Adressbereich 206 ein zweiter Satz von Projektierungsdaten abgelegt werden kann.

In dieser betrachteten Ausführungsform werden dabei nur diejenigen Projektierungsdaten in dem Kommunikationsspeicher 202 des Teilnehmers 200 abgelegt, die diesen Teilnehmer konkret betreffen, das heißt die Sende- und Empfangslisten für die Ports 1 bis n des Teilnehmers 200.

Die Projektierungsdaten sind so strukturiert, dass sie für jeden der Ports 1 bis n Sende- und Empfangslisten beinhalten. Diese Listen bilden die Basis für die geplante IRT-Kommunikation. Die Sendelisten geben die zu bestimmten Zeitpunkten über die betreffenden Ports zu sendenden Datentelegramme an, während die Empfangslisten die zu bestimmten Zeitpunkten zu empfangenden Datentelegramme mit Bezug auf bestimmte Ports des Teilnehmers 200 angeben. Sowohl die Sende- als auch die Empfangslisten werden während eines Isochronzyklus einmal komplett abgearbeitet.

Die Anfänge der Sende- und Empfangslisten, das heißt die betreffenden Einsprungadressen auf den Beginn der Listenstrukturen, sind in einer Liste 208 bzw. 210 hinterlegt.

In einem Start-Register 212 des Teilnehmers 200 ist die Einsprungadresse A oder B in denjenigen Adressbereich 204 oder 206 des Kommunikationsspeichers 202 abgelegt, der aktuell für die IRT-Kommunikation verwendet werden soll.

Des weiteren beinhaltet der Teilnehmer 200 ein Anwendungsprogramm 214. Das Anwendungsprogramm 214 dient zur Speicherung von dem Teilnehmer 200 empfangenen, neuen Projektierungsdaten in dem Kommunikationsspeicher 202 und zur Speicherung des empfangenen Umschaltzeitpunkts in dem Register 216. Die Anwendung 214 vergleicht den in dem Register 216 gespeicherten Umschaltzeitpunkt mit einem Timer 218. Der Timer 218 liefert das isochrone Zeitnormal für den Teilnehmer 200.

Erreicht der Wert des Timers 218 den Umschaltzeitpunkt, so überschreibt die Anwendung 214 das Start-Register mit der Einsprungadresse B. Dadurch wird der in dem Adressbereich 204 gespeicherte Satz von Projektdaten deaktiviert und der in dem Adressbereich 206 gespeicherte Satz von Projektdaten aktiviert, das heißt, die in dem Satz von Projektdaten im Adressbereich 206 beinhalteten Sende- und Empfangslisten werden zur Grundlage für die geplante IRT-Kommunikation von und zu dem Teilnehmer 200 gemacht.

Der Teilnehmer 200 ist Teil des isochronen, zyklischen Kommunikationssystems 220, in dem sich ein oder mehrere Teilnehmer vom Typ des Teilnehmers 200 befinden. Mit dem Kommunikationssystem 220 ist ferner ein Projektierungsmaster 222 verknüpft, über den veränderte Projektierungsdaten und dazugehörige Umschaltzeitpunkte in das Kommunikationssystem 220 eingespeist werden können.

Zur Übertragung der Projektierungsdaten wird dabei der NRT-Teil eines oder mehrerer Kommunikationszyklen genutzt. Die Länge des NRT-Teils kann dabei adaptiert werden, wenn dies die Belange der IRT-Kommunikation zulassen.

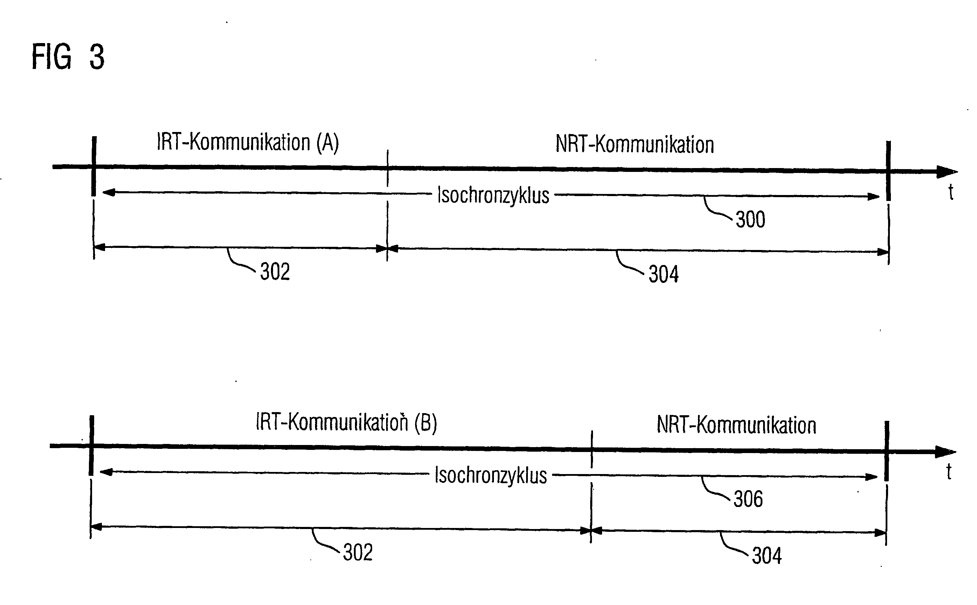

Dies wird in der Figur 3 veranschaulicht. Die Figur 3 zeigt einen Übertragungszyklus des isochronen, zyklischen Kommunikationssystems, das heißt einen Isochronzyklus 300.

Der isochrone Zyklus 300 ist in einen Teilzyklus 302 für die IRT-Kommunikation und einen Teilzyklus 304 für die NRT-Kommunikation unterteilt. Der Isochronzyklus 300 bezieht sich auf einen Zustand des Kommunikationssystems, in dem der Teilnehmer 200 (vgl. Figur 2) mit den Projektierungsdaten in dem Adressbereich 204, das heißt mit der Einsprungadresse A in dem Start-Register 212 arbeitet.

Während dies der Fall ist, werden veränderte Projektierungsdaten von dem Projektierungsmaster 222 zu dem Teilnehmer 200 und den weiteren Teilnehmern des Kommunikationssystems 220 in dem Teilzyklus 304 des Isochronzyklus 300 übertragen. Hierzu wird der Anteil des Teilzyklus 304 an dem Isochronzyklus 300 kurzfristig erhöht, um eine höhere Übertragungskapazität zu schaffen. Dies geht mit einer entsprechenden Reduzierung der Länge des Teilzyklus 302 einher. Eine solche Reduzierung der Länge des Teilzyklus 302 ist jedoch nur möglich, wenn dies die Erfordernisse der Echtzeitkommunikation erlauben, das heißt nur insoweit auch eine Abarbeitung der Sende- und Empfangslisten in dem reduzierten Teilzyklus 302 vollständig möglich ist.

Nach der Übertragung der veränderten Projektierungsdaten wird dann wieder in den Normalzustand übergegangen, der in dem Isochronzyklus 306 erreicht worden ist. In dem Isochronzyklus 306 ist die Übertragung der veränderten Projektdaten erfolgt; die Anwendung 214 (vgl. Figur 2) kann dann das Start-Register 212 mit der Einsprungadresse B zu dem Umschaltzeipunkt überschreiben, so dass die veränderten Projektierungsdaten wirksam werden.

Entsprechend wird die Aufteilung des Isochronzyklus 306 in Teilzyklen für die IRT-Kommunikation und die NRT-Kommunikation an die geringeren Anforderungen von Übertragungskapazität in dem NRT-Teil der Kommunikation angepasst, das heißt der Teilzyklus 302 wird verlängert, und der Teilzyklus 304 wird verkürzt.

Alternativ wird die Länge des NRT Teilzyklus 304 nur durch die Länge des IRT Teilzyklus 302 determiniert. Die Länge des Teilzyklus 304 ergibt sich dann aus der Differenz der Länge des Isochronzyklus 306 und des Teilzyklus 302. Die Länge des Teilzyklus 302 wird wiederum durch die für das Abarbeiten der Sende- und Empfangslisten innerhalb eines Isochronzyklus erforderlichen Zeit bestimmt.

Da der Umfang der Sende- und Empfangslisten veränderbar ist, ist auch die Länge des Teilzyklus 302 veränderbar und damit auch die verbleibende Restlänge für den Teilzyklus 304. Wird beispielsweise von den Projektierungsdaten von der Einsprungadresse A auf die Einsprungadresse B umgeschaltet, so verlängert sich der Teilzyklus 302, wie in der Fig. 3 dargestellt, da die Sende- und Empfangslisten der neuen Projektierungsdaten in diesem Beispiel umfangreicher sind als die ursprünglichen.

## Patentansprüche

1. Verfahren zum Betrieb eines isochronen, zyklischen Kommunikationssystems, wobei ein Kommunikationszyklus (300, 306) in einen ersten Teil (302) für die Echtzeitkommunikation und einen zweiten Teil (304) für die nicht-Echtzeitkommunikation aufteilbar ist, und wobei das Kommunikationssystem (220) Teilnehmer (200) aufweist, wobei ein Speicher (202) zur Speicherung von Projektierungsdaten in jedem der Teilnehmer vorhanden ist, wobei die Projektierungs-daten zumindest die Basisdaten zur Realisierung der Echtzeit-kommunikation beinhalten, mit folgenden Schritten:
- Betrieb des Kommunikationssystems mit ersten Projektierungsdaten (A) für die Echtzeitkommunikation,
- Übertragung von zweiten Projektierungsdaten (B) für die Echtzeitkommunikation in einem zweiten Teil eines oder mehrerer Kommunikationszyklen,
- Speicherung der zweiten Projektierungsdaten in den Speichern der Teilnehmer,
- Übertragung eines Umschaltzeitpunkts (216) zu den Teilnehmern, wobei der Umschaltzeitpunkt den Zeitpunkt des Umschaltens von den ersten auf die zweiten Projektierungsdaten angibt,
- Umschaltung aller Teilnehmer zum gleichen Zeitpunkt von den ersten auf die zweiten Projektierungsdaten bei Erreichen des Umschaltzeitpunktes.

2. Verfahren nach Anspruch 1, mit weiteren Schritten,
- Zuordnung von Sende- und Empfangslisten zu jeweils einem Port für jeden der Teilnehmer, wobei die Projektierungsdaten die Zuordnung beinhalten,
- Spezifikation von zu bestimmten Zeitpunkten zu sendende Datentelegramme in einer Sendeliste und Spezifikation von zu bestimmten Zeitpunkten zu empfangende Datentelegramme in einer Empfangsliste,
- Speicherung derjenigen Teile der Projektierungsdaten in dem Speicher von jedem der Teilnehmer, welche die Sende- und Empfangslisten für den betreffenden Teilnehmer beinhalten.

3. Verfahren nach Anspruch 1 oder 2, wobei in einem Teilnehmer ein Start-Register (212) mit einer Einsprungadresse (A, B) in die in dem Speicher abgelegten gültigen Projektierungsdaten vorhanden ist, wobei der Wert des Start-Registers zu dem Umschaltzeitpunkt überschrieben wird.

4. Verfahren nach einem der vorhergehenden Ansprüche 1, 2 oder 3, wobei die Projektierungsdaten und der Umschaltzeitpunkt von einem Projektierungsmaster in das Kommunikationssystem eingespeist werden.

5. Verfahren nach einem der vorhergehenden Ansprüche 1 bis 4, wobei der Umschaltzeitpunkt mittels eines Broadcast Datentelegramms an die Teilnehmer übertragen wird.

6. Verfahren nach einem der vorhergehenden Ansprüche 1 bis 5, wobei zur Übertragung der zweiten Projektierungsdaten die Aufteilung eines Kommunikationszyklus in die ersten und zweiten Teile adaptiert wird.

7. Verfahren nach einem der vorhergehenden Ansprüche 1 bis 6, wobei die Umschaltung während des laufenden Betriebs des Kommunikationssystems erfolgt.

8. Digitales Speichermedium, insbesondere Diskette, CD-ROM oder ein anderer Datenträger, mit Programmmitteln zum Betrieb eines isochronen, zyklischen Kommunikationssystems (220), wobei ein Kommunikationszyklus (300., 306) in einen ersten Teil (302) für die Echtzeitkommunikation und einen zweiten Teil (304) für die nicht-Echtzeitkommunikation aufteilbar ist, und wobei das Kommunikationssystem Teilnehmer (200) aufweist, wobei ein Speicher (202) zur Speicherung von Projektierungsdaten in jedem der Teilnehmer vorhanden ist, wobei die Projektierungsdaten zumindest die Basisdaten zur Realisierung der Echtzeitkommunikation beinhalten, wobei die Programmmittel umfassen:
- Mittel zum Empfang von Projektierungsdaten für die Echtzeitkommunikation in einem zweiten Teil eines oder mehrerer der Kommunikationszyklen,
- Mittel zur Speicherung der Projektierungsdaten in dem Speicher des betreffenden Teilnehmers,
- Mittel zum Empfang des Umschaltzeitpunkts (216) zum Umschalten auf die empfangenen Projektierungsdaten.

9. Digitales Speichermedium nach Anspruch 8, wobei zu den Projektierungsdaten einem Teilnehmer zugeordnete Sende- und Empfangslisten gehören, wobei eine Sendeliste zu einem bestimmten Zeitpunkt zu sendende Datentelegramme und eine Empfangsliste zu einem bestimmten Zeitpunkt zu empfangende Datentelegramme spezifiziert, und wobei die Programmmittel zur Speicherung der Sende- und Empfangslisten für den betreffenden Teilnehmer ausgebildet sind.

10. Digitales Speichermedium nach Anspruch 8 oder 9, wobei die Programmmittel zur Überschreibung eines Start-Registers mit einer Einsprungadresse (A, B) in den Speicher für das Umschalten ausgebildet sind.

11. Digitales Speichermedium nach einem der vorhergehenden Ansprüche 8, 9 oder 10, wobei die Programmmittel zum Empfang des Umschaltzeitpunkts mit einem Broadcast Datentelegramm ausgebildet sind.

12. Teilnehmer für ein isochrones, zyklisches Kommunikationssystem (220), wobei ein Kommunikationszyklus (300, 306) in einen ersten Teil (302) für die Echtzeitkommunikation und einen zweiten Teil (304) für die nicht-Echtzeitkommunikation aufteilbar ist, mit
- einem Speicher (202) zur Speicherung von ersten und zweiten Projektierungsdaten für die Echtzeitkommunikation, wobei die Projektierungsdaten zumindest die Basisdaten zur Realisierung der Echtzeitkommunikation beinhalten,
- Mitteln (214) zum Empfang der zweiten Projektierungsdaten in einem zweiten Teil eines oder mehrerer Kommunikationszyklen,
- Mitteln (214) zur Speicherung der zweiten Projektierungsdaten in dem Speicher,
- Mitteln (214) zum Empfang eines Umschaltzeitpunkts für das Umschalten von den ersten auf die zweiten Projektierungsdaten.

13. Teilnehmer nach Anspruch 12, wobei es sich bei den Projektierungsdaten um Sende- und Empfangslisten handelt, wobei eine Sendeliste zu bestimmten Zeitpunkten zu sendende Datentelegramme und eine Empfangsliste zu bestimmten Zeitpunkten zu empfangende Datentelegramme angibt.

14. Teilnehmer nach Anspruch 12 oder 13 mit einem Start-Register (212) zur Speicherung einer Einsprungadresse auf die ersten oder zweiten Projektierungsdaten und mit Mitteln zur Überschreibung des Start-Registers zum Umschalten von den ersten auf die zweiten Projektierungsdaten zu dem Umschaltzeitpunkt.

15. Isochrones, zyklisches Kommunikationssystem, wobei ein Kommunikationszyklus (300, 306) in einen ersten Teil (302) für die Echtzeitkommunikation und einen zweiten Teil (304) für die nicht-Echtzeitkommunikation aufteilbar ist, mit mehreren Teilnehmern nach einem der vorhergehenden Ansprüche 12 bis 14 und mit einem Projektierungsmaster zur Einspeisung von zweiten Projektierungsdaten, wobei die Projektierungsdaten zumindest die Basisdaten zur Realisierung der Echtzeitkommunikation beinhalten, und des Umschaltzeitpunkts.

16. Computerprogrammprodukt mit Programmmitteln zur Durchführung eines Verfahrens nach einem der Ansprüche 1 bis 7.

## Claims

1. Method for operating an isochronous, cyclical communication system, with a communication cycle (300, 306) being able to be divided up into a first part (302) for realtime communication and a second part (304) for non-realtime communication, and with the communication system (220) featuring subscribers (200), with a memory (202) for storing project planning data being present in each of the subscribers, with the project planning data containing at least the basic data for realizing realtime communication, with the following steps:
- Operation of the communication system with first project planning data (A) for realtime communication,
- Transmission of second project planning data (B) for realtime communication in a second part of one or more communication cycles,
- Storage of the second project planning data in the memories of the subscribers,
- Transmission of a switchover point (216) to the subscribers, in which case the switchover point specifies the point in time at which the switchover from the first to the second project planning data takes place.
- Switching over all subscribers at the same point in time from the first project planning data to the second project planning data when the switchover point is reached.

2. Method in accordance with Claim 1, with further steps,
- Assignment of send and receive lists to a port for each of the subscribers in each case, with the project planning data containing the assignment,
- Specification of data telegrams to be sent at a specific point in time in a send list and specification of data telegrams to be received at a specific point in time in a receive list.
- Storage, in the memory of each of the subscribers, of those parts of the project planning data which contain the send and receive lists for the subscriber concerned.

3. Method in accordance with Claim 1 or 2, with a start register (212) being present in a subscriber with an entry address (A, B) into the valid project planning data stored in the memory, in which case the value of the start register is overwritten at switchover point.

4. Method in accordance with one of the previous claims 1, 2 or 3, with the project planning data and the switchover point being fed into the communication system by a project planning master.

5. Method in accordance with one of the previous claims 1 to 4, with the switchover point being transmitted to the subscribers by means of a broadcast data telegram.

6. Method in accordance with one of the previous claims 1 to 5, with the subdivision of a communication cycle into the first and second parts being adapted for transmission of the second project planning data.

7. Method in accordance with one of the previous claims 1 to 6, with the switchover taking place while the communication system is operating.

8. Digital storage medium, especially diskette, CD-ROM or another data medium with program means for operating an isochronous, cyclical communication system (220), in which a communication cycle (300, 306) is subdivided into a first part (302) for 9. Digital storage medium in accordance with Claim 8, with the assigned send and receive lists belonging to a subscriber for the project planning data, with a send list specifying the data realtime communication and a second part (1) for non-realtime communication and with the communication system featuring subscribers (6), with a memory (202) present for storing project planning data in each of the subscribers, with the project planning data containing at least the basic data for realizing realtime communication, with:
- means for receipt of project planning data for realtime communication in the second part of one or more communication cycles,
- means for storage of project planning data in the memory of the subscriber involved,
- means for receiving the switchover point (216) for switching over to the received project planning data.

9. Digital storage medium in accordance with claim 8, with the send and receive lists belonging assigned to a subscriber belonging to the project planning data, with a send list specifying the data telegrams to be sent at a specific point in time and a receive list specifying the data telegrams to be received at a specific point in time and with the program means for storing the send and receive lists being embodied for the subscriber concerned.

10. Digital storage medium in accordance with claim 8 or 9, with the program means being embodied for overwriting a start register with an entry address (A, B) into the memory for the switchover.

11. Digital storage medium in accordance with one of the previous claims 8, 9 or 10, with the program means being embodied for receiving the switchover point with a broadcast data telegram.list specifying data telegrams to be sent at specific points in time and a receive list specifying data telegrams to be received at specific points in time.

12. Subscriber for an isochronous, cyclical communication system (220), with at least one further subscriber, in which a communication cycle (300, 306) is divisible into a first part (302) for realtime communication and a second part (304) for non-realtime communication, with
- a memory (202) for storing the first and second project planning data for realtime communication, with the project planning data containing at least the basic data for realizing realtime communication,
- means (214) for receiving the second project planning data in a second part of one or more communication cycles,
- means(214) for storing the second project planning data in the memory,
- means (214) for receiving the switchover point for switching over from the first to the second project planning data.

13. Subscriber in accordance with claim 12, in which case the project planning data are send and receive lists, with a send list specifying data telegrams to be sent at specific points in time and a receive list specifying data telegrams to be received at specific points in time.

14. Subscribers in accordance with claim 12 or 13 with a start register (212) for storing an entry address to the first or second project planning data and with means for overwriting the start register for switching over from the first to the second project planning data at the switchover point.

15. isochronous, cyclical communication system, with a communication cycle (300, 306) able to be subdivided into a first part (302) for realtime communication and a second part (304) for non-realtime communication, with a number of subscribers in accordance with one of the previous Claims 12 to 14 and with a project planning master for feeding in second project planning data, with the project planning data containing at least the project planning data for realizing realtime communication and the switchover point.

16. Computer program product with program means for executing a method in accordance with one of the claims 1 to 7.

## Revendications

1. Procédé pour l'exploitation d'un système de communication cyclique isochrone, un cycle de communication (300, 306) pouvant être divisé en une première partie (302) pour la communication en temps réel et en une deuxième partie (304) pour la communication non en temps réel et le système de communication (220) comportant des utilisateurs (200), une mémoire (202) pour la mémorisation de données de développement étant prévue dans chacun des utilisateurs, les données de développement contenant au moins les données de base pour la réalisation de la communication en temps réel, avec les étapes suivantes :
- exploitation du système de communication avec des premières données de développement (A) pour la communication en temps réel,
- transmission de deuxièmes données de développement (B) pour la communication en temps réel dans une deuxième partie d'un ou plusieurs cycles de communication,
- mémorisation des deuxièmes données de développement dans les mémoires des utilisateurs,
- transmission d'un instant de commutation (216) aux utilisateurs, l'instant de commutation indiquant l'instant de la commutation des premières données de développement aux deuxièmes données de développement,
- commutation de tous les utilisateurs au même instant des premières données de développement aux deuxièmes données de développement lorsque l'instant de commutation est atteint.

2. Procédé selon la revendication 1, avec d'autres étapes :
- attribution de listes d'émission et de réception à chaque fois à un port pour chacun des utilisateurs, les données de développement contenant l'attribution,
- spécification de télégrammes de données à émettre à des instants déterminés dans une liste d'émission et spécification de télégrammes de données à recevoir à des instants déterminés dans une liste de réception,
- mémorisation de celles des parties des données de développement dans la mémoire de chacun des utilisateurs qui contiennent les listes d'émission et de réception pour l'utilisateur concerné.

3. Procédé selon la revendication 1 ou 2, un registre de départ (212) avec une adresse d'entrée (A, B) dans les données de développement valides enregistrées dans la mémoire étant prévu dans un utilisateur, la valeur du registre de départ étant remplacée par une écriture à l'instant de commutation.

4. Procédé selon l'une des revendications précédentes 1, 2 ou 3, les données de développement et l'instant de commutation étant introduits dans le système de communication par un maître de développement.

5. Procédé selon l'une des revendications précédentes 1 à 4, l'instant de commutation étant transmis au moyen d'un télégramme de données de diffusion dit Broadcast aux utilisateurs.

6. Procédé selon l'une des revendications précédentes 1 à 5, la division d'un cycle de communication en première et deuxième partie étant adaptée pour la transmission des deuxièmes données de développement.

7. Procédé selon l'une des revendications précédentes 1 à 6, la commutation s'effectuant pendant l'exploitation en cours du système de communication.

8. Moyen de mémorisation numérique, notamment disquette, CD-ROM ou un autre support de données, avec des moyens formant programmes pour l'exploitation d'un système de communication cyclique isochrone (220), un cycle de communication (300, 306) pouvant être divisé en une première partie (302) pour la communication en temps réel et en une deuxième partie (304) pour la communication non en temps réel et le système de communication comportant des utilisateurs (200), une mémoire (202) pour la mémorisation de données de développement étant prévue dans chacun des utilisateurs, les données de développement contenant au moins les données de base pour la réalisation de la communication en temps réel, les moyens formant programmes comprenant :
- des moyens pour la réception de données de développement pour la communication en temps réel dans une deuxième partie d'un ou plusieurs cycles de communication,
- des moyens pour la mémorisation des données de développement dans la mémoire de l'utilisateur concerné,
- des moyens pour la réception de l'instant de commutation (216) pour la commutation sur les données de développement reçues.

9. Moyen de mémorisation numérique selon la revendication 8, des listes d'émission et de réception attribuées à un utilisateur appartenant aux données de développement, une liste d'émission spécifiant des télégrammes de données à émettre à un instant déterminé et une liste de réception spécifiant des télégrammes de données à recevoir à un instant déterminé et les moyens formant programmes étant conçus pour la mémorisation des listes d'émission et de réception destinées à l'utilisateur concerné.

10. Moyen de mémorisation numérique selon la revendication 8 ou 9, les moyens formant programmes étant conçus pour écrire dans un registre de départ une adresse d'entrée (A, B) dans la mémoire pour la commutation.

11. Moyen de mémorisation numérique selon l'une des revendications précédentes 8, 9 ou 10, les moyens formant programmes étant conçus pour recevoir l'instant de commutation avec un télégramme de données de diffusion dit Broadcast.

12. Utilisateur pour un système de communication cyclique isochrone (220), un cycle de communication (300, 306) pouvant être divisé en une première partie (302) pour la communication en temps réel et en une deuxième partie (304) pour la communication non en temps réel, avec :
- une mémoire (202) pour la mémorisation de premières et deuxièmes données de développement pour la communication en temps réel, les données de développement contenant au moins les données de base pour la réalisation de la communication en temps réel,
- des moyens (214) pour la réception des deuxièmes données de développement dans une deuxième partie d'un ou plusieurs cycles de communication,
- des moyens (214) pour la mémorisation des deuxièmes données de développement dans la mémoire,
- des moyens (214) pour la réception d'un instant de commutation pour la commutation des premières données de développement aux deuxièmes données de développement.

13. Utilisateur selon la revendication 12, les données de développement étant des listes d'émission et de réception, une liste d'émission indiquant des télégrammes de données à émettre à des instants déterminés et une liste de réception indiquant des télégrammes de données à recevoir à des instants déterminés.

14. Utilisateur selon la revendication 12 ou 13 avec un registre de départ (212) pour la mémorisation d'une adresse d'entrée dans les premières ou deuxièmes données de développement et avec des moyens pour écrire dans le registre de départ pour la commutation des premières données de développement aux deuxièmes données de développement à l'instant de commutation.

15. Système de communication cyclique isochrone, un cycle de communication (300, 306) pouvant être divisé en une première partie (302) pour la communication en temps réel et en une deuxième partie (304) pour la communication non en temps réel, avec plusieurs utilisateurs selon l'une des revendications précédentes 12 à 14 et avec un maître de développement pour l'introduction de deuxièmes données de développement, les données de développement contenant au moins les données de base pour la réalisation de la communication en temps réel, et de l'instant de commutation.

16. Produit formant programme informatique avec des moyens formant programmes pour la mise en oeuvre d'un procédé selon l'une des revendications 1 à 7.
